# EUROPÄISCHE PATENTANMELDUNG

(11) **EP 0 606 528 A2**
(43) Veröffentlichungstag der Anmeldung: **20.07.1994**
(21) Anmeldenummer: 93113488.6
(22) Anmeldetag: 24.08.1993
(51) Int. Cl.: F04D 29/60, F04D 13/08, A01K 63/04

(54) **Elektrisch antreibbares Flüssigkeitspumpensystem, Belüftungseinrichtung sowie Anschlussflansch**

(30) Priorität: 12.12.1992 DE 4242021
(71) Anmelder: Weinberg, Ulli, D-91154 Roth (DE); Hohenleitner, Herbert, D-90513 Zirndorf (DE)
(72) Erfinder: Weinberg, Ulli, D-91154 Roth (DE)
(74) Vertreter: Hafner, Dieter, Dr.rer.nat., Dipl.-Phys.

(57) **Zusammenfassung**

Die Erfindung betrifft ein elektrisch antreibbares Flüssigkeitspumpensystem mit einem Pumpengehäuse (2), das an einer Seite (seiner Unterseite 3) mit einer Ansaugöffnung (4) und an einer anderen Seite (Oberseite 5) mit einer Auslaßöffnung (6) versehen ist, in dem eine mit der Ansaugöffnung (4) und der Auslaßöffnung (6) verbundene Pumpkammer (8) angeordnet ist, in welcher sich ein motorisch antreibbares Förderelement (9) bewegt sowie einem mit dem Pumpengehäuse verbindbaren Fußteil zum Aufstellen der Pumpe auf dem Boden eines Flüssigkeitsbehälters derart, daß sich das Pumpengehäuse zumindest teilweise unter dem Flüssigkeitsspiegel befindet, wobei die Auslaßöffnung (6) von einem Auslaßflanschelement (20) umgeben ist, das so ausgebildet ist, daß an das Auslaßflanschelement (20) ein Gegenflansch (21) eines mit dem Pumpengehäuse (2) und dem angesetzten Fußteil (13) zu einem freistehenden und/oder selbsttragenden turmartigen Gebilde verbaubaren Durchfluß/oder Ausflußsystemelement abdichtend und sich gegenseitig abstützend ansetzbar ist.

## Beschreibung

Die Erfindung betrifft ein elektrisch antreibbares Flüssigkeitspumpensystem mit den Merkmalen des Oberbegriffes des Patentanspruches 1, eine Belüftungseinrichtung mit Rückschlagventilfunktion sowie einen Anschlußflansch.

Derartige Flüssigkeitspumpensysteme werden in unterschiedlichen technischen Bereichen verwendet, unter anderem im Bereich der Aquaristik und der Floristik. Bekannte Flüssigkeitspumpensysteme bestehen aus einer Pumpe mit einem Pumpengehäuse, das an einer Seite mit einer Ansaugöffnung und meist an einer anderen Gehäuseseite mit einer Auslaßöffnung versehen ist. Im Pumpengehäuse ist ein elektrischer Antrieb angeordnet, in einer Pumpkammer, die mit der Ansaugöffnung und der Auslaßöffnung verbunden ist, wird ein Förderelement motorisch angetrieben und treibt die zu fördernde Flüssigkeit durch den das Pumpengehäuse durchsetzenden Flüssigkeitskanal.

Bekannte Pumpen von Flüssigkeitspumpensystemen weisen auch bereits ein mit dem Pumpengehäuse verbindbares Fußteil auf, mit dem die Pumpe am Boden eines Flüssigkeitsbehälters so aufgestellt werden kann, daß sich das Pumpengehäuse zumindest teilweise unter dem Flüssigkeitsspiegel befindet, was für den Ansaugvorgang bedeutungsvoll ist.

An bekannten Flüssigkeitspumpensystemen erscheint es als nachteilig, daß die bekannten Pumpen auslaßseitig mit einem Anschlußelement versehen sind, an welchen ein Flüssigkeitsschlauch oder ein Rohrstück befestigt werden kann, welches die Flüssigkeit zu einer Auslaßdüse, einer Zierfigur, einem Kugelbrunnenauslaß oder sonstigen Auslaßelementen führt. Derartige Durchfluß oder Auslaßelemente müssen in der Regel gesondert im Bereich des Flüssigkeitsbehälters verlegt und befestigt werden, was einen nicht unerheblichen Material- und Montageaufwand mit sich bringt. Oftmals sind dazu gesonderte Stützelemente notwendig, beispielsweise Stützstangen, die gesondert mit dem Flüssigkeitsbehälterboden oder der Behälterwand verbunden werden müssen. Ist es einmal notwendig, ein solches mehrfach befestigtes, kompliziert verbundenes System zu reinigen oder zu warten, muß in der Regel eine Mehrzahl von flüssigkeitsführenden Verbindungen oder Befestigungselementen gelöst und nachfolgend wieder zusammengebaut werden, was mit einem nicht unerheblichen Arbeitsaufwand verbunden ist. Darüber hinaus ist die Variabilität bekannter Flüssigkeitspumpensysteme aufgrund mangelnder Systemkomponenten beschränkt, der Benutzer muß meist selbst für geeignete Verbindungselemente und Auslaßelement zwischen den Pumpenauslaß und der flüssigkeitsspeienden Düse sorgen. Außerdem lassen sich mit den Systemen nach dem Stand der Technik definierte Strömungsverhältnisse meist nicht erreichen.

Der Erfindung liegt die Aufgabe zugrunde, ein Flüssigkeitspumpensystem derartig auszubilden, daß es schnell auf- und abbaubar ist, einfach zu warten ist und gegenüber bekannten Flüssigkeitspumpensystemen eine große Variationsbreite an unterschiedlichen Gestaltungsformen bei definierten Fließverhältnissen zuläßt. Diese Aufgabe wird durch die kennzeichnenden Merkmale des Anspruches 1 dadurch gelöst, daß zumindest die Auslaßöffnung von einem Flanschelement umgeben ist, das so ausgebildet ist, daß an das Auslaßflanschelement unmittelbar ein weiterer Gegenflansch eines mit dem Pumpengehäuse zu einer freistehenden, selbsttragenden turmartigen Gebilde verbaubaren Durchfluß/oder Ausflußsystemelement abdichtend und sich gegenseitig abstützend ansetzbar ist.

Dadurch ist es erstmals möglich, das Pumpengehäuse, das von dem Fußteil getragen wird, quasi als Basis für ein komplettes "Springbrunnensystem" zu verwenden, das nur einfach zusammengesteckt werden muß und als eine einstückig handhabbare Einheit in einen Flüssigkeitsbehälter gesetzt und sofort betrieben werden kann. Schlauchzwischenstücke, Schlauchverbinder und dergleichen können entfallen. Je nach Anzahl und Art der auf das Pumpengehäuse unmittelbar aufsetzbaren Systemelemente, die entweder als Durchflußssystemelemente oder als Ausflußsystelemente ausgebildet sein können, kann der so gebildete turmartige Brunnen unterschiedliche Funktionen erfüllen.

Falls gemäß Anspruch 2 auch die Ansaugöffnung von einem Ansaugflanschelement umgeben ist, an welches ein Gegenflansch am Fußteil der Pumpe ansetzbar ist, können innerhalb des Systems auch unterschiedliche Fußteile verwendet werden. Es ist auch möglich, die Pumpe beispielsweise mit einem Aquarienfilterrohr zu kombinieren und als Aquarienfilter-Pumpensystem auszubilden, wobei dann an der Unterseite des Aquarienfilterrohres ein Fußteil angesetzt werden kann, welches das Aquarienfilterrohr, die Pumpe und an die Pumpe nachfolgend turmartig aufgesetzte weitere Elemente trägt.

Die Erfindung offeriert mithin ein Baukastensystem, das betreffend seine Verbindungselemente optimal aneinander angepasst und abgestimmt ist. Die aneinander aufsetzbaren Teile passen so gut zueinander, daß sie durch einfaches Aneinanderstecken sofort ihre volle Funktion entfalten, ohne gesondert abgedichtet oder befestigt werden zu müssen.

Vorteilhafterweise haben das Ansaugflanschelement und das Auslaßflanschelement unterschiedliche Durchmesser, dadurch ist sichergestellt, daß für die Auslaßseite vorgesehene Systemteile auch wirklich nur auf der Auslaßseite ansetzbar sind und umgekehrt auf der Ansaugseite notwendige oder vorteilhafterweise einsetzbare Systemelemente eben nur auf der Ansaugseite passen. Es ist auch möglich, dem Auslaß- und dem Ansaugflanschelement am Pumpengehäuse unterschiedliche Formen zuzuordnen, wodurch ebenfalls Verwechslungen vermieden werden können. Es ist in der Regel ausreichend, wenn die Flanschelemente eine Klemmsitzwirkung ausüben, die eine Flüssigkeitsdichtung hervorruft. Verschrauben oder weitere Verschlußmaßnahmen im Verbindungsbereich der Systemelemente sind nicht notwendig.

Ferner ist es besonders vorteilhaft, wenn die aufeinander turmartig aufgesetzten Systemelemente sich nicht nur über den Flanschbereich beaufschlagen, sondern auch mit Wandungsbereichen, die außerhalb des Flanschbereiches liegen. Damit ist ein besonders kippsicherer und damit funktionssicherer Turmaufbau der aneinander angesetzten Systemelemente möglich. Darüber hinaus ergibt sich ein ästhetisch ansprechender Anblick, so daß beispielsweise unter Verwendung eines mit einer Leuchtquelle versehenen Durchflußelementes das Flüssigkeitspumpensystem auch ohne weitere Zierelemente wie Pflanzen, Tierfiguren, Rieselsteine und dergleichen einfach als technisch schöner, interessanter Gegenstand in den Raum gestellt werden kann. Werden dann noch die Durchfluß- und Ausflußsystemelemente aus transparentem Material wie beispielsweise Plexiglas hergestellt, so ergibt sich bei Verwendung beispielsweise einer farbigen Leuchtquelle ein farbig leuchtender, schillernder Wasserturm mit besonderen Effekten.

Besonders vorteilhaft ist es, wenn die gegenseitige, flüssigkeitsflansch-umgebende Abstützwirkung zwischen sich gegenüberliegenden Wandungsbereichen auch zwischen dem Fußteil und der Unterseite des Pumpengehäuses vorgenommen ist.

Wenn das Pumpengehäuse eine kubische Querschnittsform aufweist, d. h. die Länge aller vier Seitenwandungen identisch ist, können turmartig aufgesetzte Systemelemente in vier Richtungen aufgesetzt werden, ohne daß der geschlossene optische Gesamteindruck des turmartigen Flüssigkeitspumpensystems verlorengeht. Seitlich aus den Elementen herausstehende Teile wie beispielsweise ein Stromkabel, das zu einer Beleuchtungsquelle führt, eine Luftleitung, mit welcher Luft in den flüssigkeitsführenden Kanal eingeblasen wird, ein Verstellelement, mit welchem der lichte Querschnitt eines Durchflußelementes verstellt werden kann und dergleichen können in unterschiedlichen Richtungen angeordnet werden.

Es ist besonders vorteilhaft, wenn das Fußteil peripher über die Seitenwandungen des Pumpengehäuses hinaussteht. Je höher der Turm ist, desto größer sollte die Aufstellfläche gewählt sein; es ist zweckdienlich, bei relativ hohen Turmaufbauten auch ein relativ großflächig aufstehendes Fußteil zu verwenden. Da Flüssigkeit im Bereich des Flüssigkeitsbehälterbodens angesaugt wird, ist es besonders zweckdienlich, wenn im Fußelement eine Filterkammer angeordnet ist, die mit einem auswechselbaren oder zumindest auswaschbaren Filtermaterial, beispielsweise einem Schaumstoffstück ausgefüllt sein kann, da dann Schmutzrückstände, die sich am Behälterboden abgelagert haben, nicht in das System gelangen können.

Besonders stabil steht die gesamte Anordnung dann, wenn der Fuß als ein mit einem Knebelelement aktivierbarer Saugfuß ausgebildet ist.

Da eine exakte Aufstellung des Turmes umso wichtiger wird, je höher der Turm ist, ist im Bereich des Fußteiles eine Neigungsverstellvorrichtung vorgesehen. Eine derartige Verstellvorrichtung kann beispielsweise als Dreipunktlagerung ausgebildet sein, wobei zwei Lagerpunkte durch spindelartig verstellbare Füße ausgebildet sind. Dadurch kann der turmartige Aufbau wirklich ins Lot gebracht werden, so daß ein sehr definierter, gleichmäßiger Flüssigkeitsfluß erzielt werden kann.

Da es insbesondere bei Zimmerbrunnen notwendig ist, die Stärke des Durchflusses an die jeweiligen Gegebenheiten, insbesondere an den Radius des flüssigkeitsaufnehmenden Behälters so anzupassen, daß Flüssigkeit nicht darüber hinausspritzt, sind entweder der wirksame Querschnitt des Einlaßflansches oder des Auslaßflansches variierbar. Besonders vorteilhaft ist es jedoch, eine Flüssigkeitsfördermengenverstelleinheit als an die Pumpe unmittelbar oder mittelbar ansetzbares Durchflußelement auszubilden, da dann das Pumpengehäuse frei von derartigen Verstellelementen ist, was sich sowohl auf die Kompaktheit der Pumpe und auch auf ihre Förderleistung vorteilhaft auswirkt. Falls die volle Pumpenleistung benötigt wird, kann die Flüssigkeitsfördermengen-Verstelleinheit einfach abgenommen werden, wodurch die Pumpe mit ihrer Kompaktheit und vollen Leistungskraft innerhalb des Systems verfügbar ist.

Durchflußsystemelemente können mit unterschiedlichen Zusatzfunktionen ausgebildet werden. Beispielsweise ist eine Durchlüftereinheit denkbar, in der Luft von einer Luftpumpe über einen Seitenkanal in den Flüssigkeitskanal eingeblasen wird. Genausogut ist es möglich, innerhalb eines Durchflunßsystemelementes eine Beleuchtungseinheit vorzusehen, wodurch sich unterschiedliche Lichteffekte erzielen lassen, die insbesondere dann besonders gut zum Vorschein treten, wenn die flüssigkeitsführenden Systeme aus Plexiglas oder Acrylglas ausgebildet sind.

Die vorliegende Erfindung betrifft - nebengeordnet beansprucht - eine Belüftungseinrichtung, welche insbesondere für ein Flüssigkeitspumpensystem nach einem der Ansprüche 1 - 32 verwendbar ist. Bei bisher bekannten Anordnungen war nicht auszuschließen, daß Wasser aus einer Sprudelsäule in die Membranpumpe zur Versorgung der Sprudelsäule mit Luft gelangen konnte, wodurch eine Beschädigung der Membranpumpe und darüber hinaus vor allem eine Gefährdung von Personen eintreten konnte. Der Grund dieser Gefahr lag darin, daß bestimmte Montagehinweise eingehalten (Anbringung der Membranpumpe an einer im Vergleich zum Wasserspiegel höheren Position) oder zusätzliche Rückschlagventile als Zubehörteile eingebaut werden mußten. Derartige Ventile waren jedoch lediglich als Zubehör verfügbar, so daß nur eine geringe Anzahl von Anwendern auf die Ventile zurückgegriffen haben.

Die Aufgabe dieses Unterkomplexes der Erfindung bestand darin, die vorbeschriebenen Nachteile zu vermeiden. Zu diesem Zweck wurde eine Belüftungseinrichtung geschaffen, welche gekennzeichnet ist durch:
a) ein Gehäuse, welches mit einmem Flüssigkeitssystem verbindbar ist;
b) eine innerhalb des Gehäuses angeordneten, flächigen Einrichtung zur Erzeugung einer Vielzahl von flächig verteilten Luftbläschen sowie
c) einer Einwegeventileinrichtung, welche innerhalb des Gehäuses angeordnet ist und bei Wegfall der Luftversorgung einen Rückfluß des Wassers in die Pumpe verhindert.

Der Vorteil der Belüftungseinrichtung liegt darin, daß aufgrund der in das Gehäuse integrierten Belüftungs- sowie Einwegeventileinrichtung es - auch bei Falschmontage - zu keinem Rückfluß von Wasser in die Membranpumpe kommen kann. Belüftungs- und Einwegeventileinrichtung sind eine einzige handhabbare Einheit und werden erfindungsgemäß immer zusammen in einem Flüssigkeitspumpensystem verbaut.

Der Gegenstand des Anspruchs 34 hat den Vorteil, daß Luftbläschen flächig verteilt in eine Sprudelstrecke eingeleitet werden können, wodurch sich eine wesentlich verbesserte Sprudelwirkung im Vergleich zu bisherigen Sprudelsteinen ergibt. Dementsprechend wird das gesamte Volumen einheitlich von den einzelnen Luftbläschen durchströmt. Darüber hinaus ergeben sich fertigungstechnische Vorteile, da der Belüftungskörper bzw. Belüftungsstein lediglich als Scheibe gefertigt zu werden braucht und keinen eigenen nur unter erheblichem Aufwand mit dem Belüftungsstein zu verbindenden Luftanschluß aufweisen muß. Der Belüftungsstein dieser neuartigen Belüftungseinrichtung kann demzufolge komplett maschinell gefertigt werden.

Dies gilt im übrigen auch für die in dem Belüftungsstein einzubringende, seitlich umlaufende Nut, die einen O-Ring aufnehmen soll.

Die Ausgestaltung der Belüftungseinrichtung gemäß Anspruch 36 gleichsam als sandwichartige Anordnung von Luftkammer, Ventilplättchen, Druckfeder sowie Belüftungsstein gewährleistet sowohl fertigungs- als auch montagetechnische Vorteile. Die Luftkammer kann beispielsweise intergraler Bestandteil des Gehäuses mit diesem zusammen z.B. im Spritzgußverfahren hergestellt werden, sämtliche anderen Teile sind einfach und daher kostengünstig herstellbare Zusatzteile.

Um die Belüftungseinrichtung in einfacher Weise in ein Flüssigkeitssystem bzw. in das betreffende Flüssigkeitspumpensystem ohne aufwendige Anpassungsmaßnahmen einzusetzen, ist das Gehäuse als A mit ober- und/oder unterseitigem Flansch ausgebildet. An der Unterseite kann demzufolge z.B. ein ebenfalls mit einem Flansch versehener Standfuß (z.B. Saugfuß) oder ein Beleuchtungsmodul oder dgl. angesetzt werden. Die Belüftungseinrichtung kann darüber hinaus ebensogut auch in ein Leitungssystem eines Labors o.ä. eingesetzt werden.

Die Erfindung ist anhand eines Ausführungsbeispieles in den Zeichnungsfiguren näher erläutert. Diese zeigen:
- Fig. 1: eine Schnittdarstellung einer Pumpe mit darunter ansetzbarem Fußteil;
- Fig. 2: eine synoptische Schnittdarstellung des gesamten Systems, wobei neben der Pumpe unterschiedliche Pumpenfüße und unterschiedliche Durchfluß- und Ausflußsystemelemente dargestellt sind;
- Fig. 3: eine modifizierte synoptische Schnittdarstellung des Systems, in der einige Systemteile gegenüber Fig. 2 modifiziert oder ausgetauscht sind;
- Fig. 4: eine explosionsartige Darstellung der erfindungsgemäßen Belüftungs- einschließlich Einwegeventileinrichtung;
- Fig. 5: eine komplette Sprudelstrecke unter Verwendung der erfindungsgemäßen Belüftungseinrichtung in Teilschnittdarstellung sowie
- Fig. 6: eine Darstellung des erfindungsgemäßen Anschlußflansches in Schnittdarstellung.

Zunächst wird auf Zeichnungsfigur 1 Bezug genommen. Die zum dem Flüssigkeitspumpensystem gehörige Pumpe 1 weist ein Pumpengehäuse 2 auf, das auf seiner Unterseite 3 mit einer Ansaugöffnung 4 und auf seiner Oberseite 5 mit einer Auslaßöffnung 6 versehen ist. Im Pumpengehäuse 2 ist eine mit der Ansaugöffnung 4 und der Auslaßöffnung 6 durch Kanäle 7 verbundene Pumpkammer 8 angeordnet, in welcher sich ein Förderelement 9 dreht, das durch den Rotor 10 über eine Welle 11 angetrieben wird, wobei die den Rotor treibenden felderzeugenden Elemente neben dem Rotor 10 und über dem Rotor 10 in dem Gehäusebereich 12 angeordnet sind. Dorthinein verläuft ein Stromkabel, das in Zeichnungsfigur 1 nicht dargestellt ist.

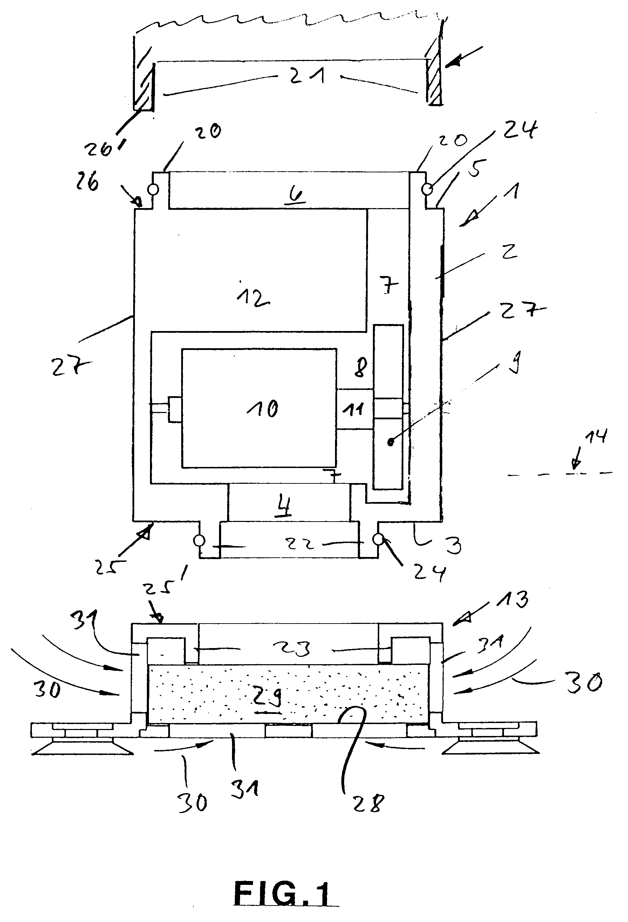

Ferner geht aus Fig. 1 ein mit dem Pumpengehäuse 2 verbindbares Fußteil 13 hervor, das zum Aufstellen der Pumpe 1 auf dem Boden eines Flüssigkeitsbehälters dient. Das Pumpengehäuse sollte zumindest beim Anlaufen der Pumpe bis zu einer Benetzungslinie 14 im Wasser stehen, damit das Förderelement 9 seine flüssigkeitsfördernde Wirkung entfalten kann.

Die Auslaßöffnung 6 im Bereich der Oberseite 5 des Pumpengehäuses 2 ist von einem runden, großdimensionierten Auslaßflanschelement 20 umgeben, das nach Art einer Zylinderwandung über die Oberseite 5 des Pumpengehäuses 2 hinaussteht und so ausgebildet ist, daß auf es ein in Zeichnungsfigur 1 nur andeutungsweise dargestellter Gegenflansch 21 aufsetzbar ist, der zu einem Durchfluß oder Ausflußsystemelement gehört, das mit dem Pumpengehäuse 2 und dem angesetzten Fußteil zu einem freistehenden, selbsttragenden turmartigen Gebilde in abdichtender und sich gegenseitig abstützender Weise verbaut werden kann.

Auch die Ansaugöffnung 4 im Bereich der Unterseite 3 ist von einem Ansaugflanschelement 22 umgeben, das an ein Gegenflanschelement 23 des Fußteils 13 derart ansetzbar ist, daß zwischen dem Fußteil 13 und dem Pumpengehäuse 2 eine flüssigkeitsdichte, sich gegenseitig abstützende Verbindung erzielt wird. Das Ansaugflanschelement 20 und das Auslaßflanschelement 22 haben unterschiedliche Durchmesser, was natürlich zur Folge haben muß, daß die dazu passenden Gegenflansche 21 und 23 entsprechend angepasste Durchmesser haben.

Beim dargestellten Ausführungsbeispiel haben sowohl das Ansaugflanschelement 22 als auch das Auslaßflanschelement 20 einen kreisförmigen Querschnitt, es ist aber auch möglich, die Flansche als unrunde Flansche auszubilden.

Sowohl das Ansaugflanschelement 22 als auch das Auslaßflanschelement 20 beaufschlagen die an sie angesetzten Gegenflansche 21, 23 mit Klemmsitzwirkung, die durch ein im Flanschverbindungsbereich angeordnetes O-Ring-Dichtelement 24 hervorgerufen oder zumindest abdichtend verstärkt wird.

Der mechanische Halt zwischen den aneinander angesetzten Teilen, nämlich zwischen dem Pumpengehäuse 2 und dem Fußteil 13 bzw. zwischen dem Pumpengehäuse 2 und daran ansetzbaren Durchflußsystemelementen wird nicht nur durch die Flanschverbindungen hervorgerufen, sondern auch dadurch, daß die Flansche umgebende Gehäusebereiche 25, 25' und 26, 26' in Montageendstellung aneinander anliegen, wodurch eine zusätzliche abstützende Wirkung erzielt wird.

Das Pumpengehäuse 2 soll eine kubische oder kubus-ähnliche Form aufweisen, der Querschnitt der Durchflußsystemelemente oder auch einiger Abflußsystemelemente ist daran angepasst.

Bedeutungsvoll ist ferner, daß das Fußteil 13 seitlich über die Seitenwandungen 27 des Pumpengehäuses 2 hinaussteht, wodurch eine bessere Standfestigkeit des gesamten Turms erzielt wird. Ferner ist im Fußteil 13 eine mit seinem Gegenflansch 23 verbundene Filterkammer 28 mit einem Filtermaterial 29 vorgesehen, die Flüssigkeit wird entlang der Pfeile 30 über Öffnungen 31 in das Fußteil eingesaugt und gelangt von dort in das Pumpengehäuse 2.

Nachfolgend wird auf Zeichnungsfigur 2 Bezug genommen. Dort sind zunächst die Systemkomponenten nochmals dargestellt, die bereits aus Zeichnungsfigur 1 im Detail hervorgehen, nämlich die Pumpe 1 und das Fußteil 13.

Darüber hinaus ist ein weiteres, größer dimensioniertes Fußteil 35 dargestellt, das ähnlich wie das Fußteil 13 ausgebildet ist, nämlich zunächst mit einem Gegenflansch 23 versehen ist, der an der Ansaugflanschelement 22 am Pumpengehäuse 2 passt. Beim Ansetzen des Pumpenfusses 35 an die Unterseite 3 des Pumpengehäuses 2 liegen auch wieder sich gegenüberliegende Wandungsbereiche aneinander an und führen die stabilisierende, abstützende Wirkung herbei.

Oberhalb der Pumpe 1 ist nun ein erstes Durchflußsystemelement 40 angeordnet, das als Beleuchtungseinheit ausgebildet ist und eine zumindest teilweise von Flüssigkeit umspülte Leuchtquelle 41 aufweist. Die Leuchtquelle 41 wird über einen Transformator 42 und ein Kabel 43 mit der notwendigen Betriebsspannung versorgt. Um mit einem derartigen Durchflußsystemelement 40 den angestrebten turmartigen Aufbau erreichen zu können, ist an seiner Unterseite ein Gegenflansch 21 angeordnet, der auf das Auslaßflanschelement 20 des Pumpengehäuses 2 passt.

An seiner Oberseite ist ein dem Auslaßflanschelement 20 entsprechender Befestigungsflansch 44 vorgesehen. Um eine möglichst freie Kombinationsmöglichkeit mit den Durchflußelementen innerhalb des turmartigen Aufbaues zu haben, sind alle Durchflußelemente mit dem Gegenflansch 21 an ihrer Unterseite und dem Befestigungsflansch 44 an ihrer Oberseite versehen.

Mit 45 ist nun ein weiteres Durchflußsystemelement bezeichnet, das als Durchlüftereinheit ausgebildet ist, die einen an eine Luftpumpe 46 über eine Schlauchverbindung 47 angeschlossenen Belüfterstein 48 aufweist, der im Flüssigkeitskanal angeordnet ist. Auch das Durchflußsystemelement 45 ist an seiner Unterseite mit einem Gegenflansch 21 und an seiner Oberseite mit einem Befestigungsflansch 44 versehen.

Mit 49 ist ein schalenartiges Element bezeichnet, das mit einem Ablaufrohr 50 versehen ist, durch welches rückfließende Flüssigkeit am Pumpengehäuse 2 vorbeigeleitet wird. Das schalenartige Element 49 dient als Auffangschale für einen Flüssigkeitsstrahl, der von dem System am turmoberen Ende abgegeben wird. Um definierte Rückflußverhältnisse einstellen zu können, ist das Ablaufrohr 50 in axialer Richtung verschiebbar im schalenartigen Element 49 gehaltert, so daß sich ein gewisser Wasserstand in dem schalenartigen Element 49 einstellen läßt. Damit ist die Einlaßöffnung 51 des Ablaufrohres 50 bezogen auf den Boden des schalenartigen Elementes 49 höhenverstellbar angeordnet.

Das schalenartige Element 49 hat in seinem Boden eine Öffnung, die so dimensioniert ist, daß das schalenartige Element 49 in einen beliebigen Flanschverbindungsbereich des Pumpenturmes eingesetzt werden kann.

Oberhalb des schalenartigen Elementes 49 befindet sich nun ein weiteres Durchlußsystemelement 52, in welchem sich eine Schiebervorrichtung 53 befindet, die über einen nach außen vorstehenden Verstellhebel 54 verstellt werden kann, wodurch der wirksame Querschnitt des in ihm verlaufenden Durchflußkanales veränderbar ist.

Oberhalb des Durchflußsystemelementes 52 ist ein erstes deckelartiges Reduzierungselement 55 vorgesehen, das an seiner Oberseite einen Befestigungsflansch 44 aufweist und ferner mit einem Steckansatz 56 versehen ist, auf welchem ein Rückflußrohr 57 aufsetzbar ist. Auf den Befestigungsflansch 44 kann beispielsweise ein zylindrischer transparenter Rohrkörper 58 aufgesetzt werden, in den die hochgepumpte Flüssigkeit durch die Öffnung 59 eintritt und sich bis zur Höhe der Auslauföffnung 60 des Rückflußrohres 57 staut.

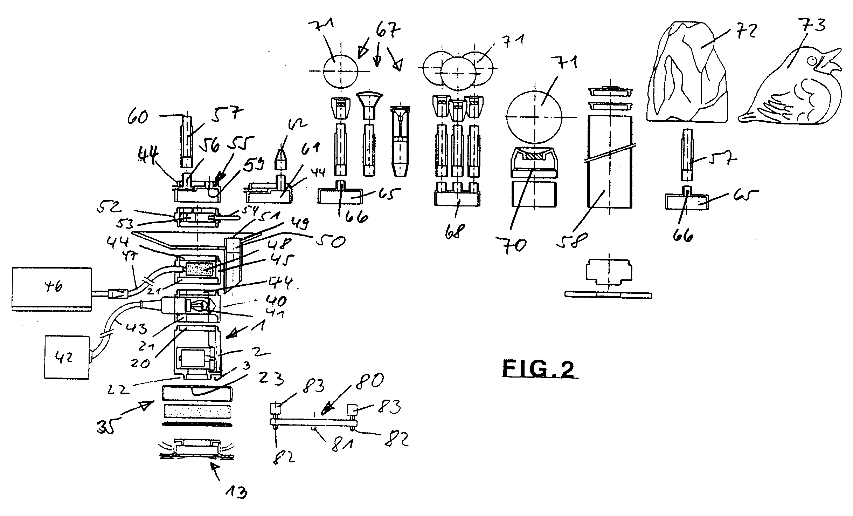

Die weiteren in Fig. 2 dargestellten Elemente sind Ausflußsystemelemente, die nachfolgend nur kurz beschrieben werden. Zunächst ist ein weiteres Reduzierungselement 61 vorgesehen, das mit einer Spritzdüse 62 versehen ist, durch welche Flüssigkeit in einen Rohrkörper 58 gespritzt werden kann, der auf dem Befestigungsflansch 44 des Reduzierungselementes 55 aufgesetzt ist.

Ein drittes Reduzierungselement 65 mit einem querschnittsverengtem Rohransatz 66 ist unter drei Ausflußsystemelementen 67 dargestellt, von denen eines als Kugelbrunnenelement, mit Kugel 21 ein weiteres als brauseartiger Flüssigkeitsspender und ein drittes als Vorrichtung zur Abgabe eines Flüssigkeitstellers ausgebildet ist.

Ein viertes Reduzierungselement 68 weist drei Rohransätze auf, so daß drei mehr oder weniger identische Kugelbrunnenelemente aufsetzbar sind.

Ein weiteres Ausflußsystemelement 70 ist als Kugelbrunnenelement mit einer großen Kugel 71 ausgebildet. 72 bezeichnet einen Rieselstein und 73 ein Ziertier, beide Elemente 72/73 können auf ein deckelartiges Reduzierungselement 65 aufgesetzt werden. Der aus dem Verlängerungsrohrelement 57 austretende Flüssigkeitstrahl rieselt dann entweder auf der Oberfläche des Rieselsteins 72 herunter oder tritt aus dem Schnabel des Ziertiers 73 aus.

Um einen Turm, wie er beispielsweise auf der linken Seite der Fig. 2 explosionsartig dargestellt ist, möglichst im Lot justieren zu können, ist eine Neigungsverstellvorrichtung 80 vorgesehen, die unter den Systemturm gesetzt werden kann oder auch als Bodenplatte eines Fußteils 13, 35 montiert werden kann. Die Neigungsverstellvorrichtung 80 ist als Dreibein ausgebildet und weist einen starren Fuß 81 sowie zwei verstellbare Füße 82 auf, die als Spindelschrauben 83 ausgebildet sind.

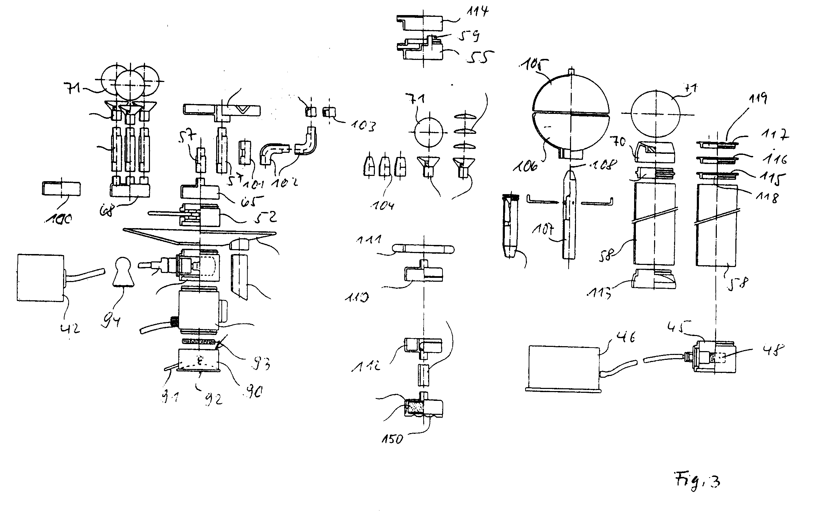

Bei der synoptischen Schnittdarstellung gemäß Fig. 3 weisen Elemente, die in Fig. 2 bereits dargestellt sind, identische Bezugszeichen wie in Fig. 2 auf.

Modifiziert gegenüber Fig. 2 ist in Zeichnungsfigur 3 zunächst das Fußteil 90, das mit einem Exzenterhebel 91 versehen ist, über welchen der Mittelbereich einer elastischen Bodenwandung 92 zur Verursachung einer Sachwirkung aktiv anhebbar ist. Durch einen derartigen Saugfuß kann das aufgebaute turmartige System so stabil gehalten werden, daß auch seitlich über den Turm hinausstehende Elemente, die ansonsten eine Kippbewegung des Turms verursachen würden, nicht zu einer Destabilisierung des Turmes führen.

In dem Fußteil 90 ist - wie bei den Fußteilen, die in Fig. 2 dargestellt sind, ebenfalls ein Filtereinsatz 93 eingesetzt. Mit 94 ist ein separater Leuchtenhalter bezeichnet, in den die als Einschubeinsatz ausgebildete Leuchtquelle 41 eingesetzt und so als gesonderte Leuchtquelle, beispielsweise als Blumenleuchte verwendet werden kann.

In Fig. 3 ist mit Bezugsziffer 114 ein deckelartiges Teil als Aufsatz des zylindrischen transparenten Rohrkörpers 58 vorgesehen, welches einen flächigen Ablauf von Wasser für den Einsatz als Bachlauf gewährleisten soll. Das deckelartige Teil 114 ist erfindungsgemäß mit einem entsprechenden Flansch verbunden.

Weiterhin sind aus Fig. 3 unterschiedliche Abschlußdeckel 115 - 117 für den Abschluß des zylindrischen Rohrkörpers 58 vorgesehen. Eine Abdeckung sollte erfolgen, da an der Oberseite im Bereich des Wasserspiegels großvolumige Blasen entstehen und hierdurch Wasser hochspritzt, was zu Kalkablagerungen an der Innen- sowie Außenseite des Rohrkörpers 58 führen kann. Durch die Verwendung der Deckel 115 - 117 wird dies verhindert.

Die Ausgestaltung des Deckels 115 weist eine mittig angebrachte Bohrung 118 auf. Der Deckel 116 (als Alternative davon) ist vollständig geschlossen. Der Deckel 117 ist an der Oberseite offen und weist darüber hinaus in der Deckelebene querverlaufende Kanäle 119 auf, die als Wasser-Ansaugkanäle wirken, sofern der Deckel 117 an der Unterseite in einem Wasserreservoir (wie das Teil 150 in Fig. 3) angeordnet wird. Die Deckel 115 - 117 weisen wiederum jeweils einen Flansch zur Gewährleistung einer baukastenartigen Verbindung mit den übrigen Teilen des Flüssigkeitspumpensystems auf. Ohne Verwendung der Abschlußdeckel würde der Wasserstand aufgrund der aufplatzenden Blasen sich in kurzer Zeit verringern. Die Abschlußdeckel bewirken, daß das aufspritzende Wasser dann wieder zurück in das Volumen der Wassersäule geführt wird.

Systemergänzend zeigen Bezugszeichen 100 noch eine Abschlußkappe, die Teile 101 - 103 unterschiedliche Durchflußrohrelemente, 104 sind Ausflußdüsen die Kugelelemente 105 und 106 bilden zusammen mit dem Düsenelement 107 mit Lagerstift 108 einen von innen benetzbaren drehbaren Kugelbrunnen, Teil 110 betrifft eine Haltekappe, die zusammen mit einem Befestigungsring 111 dazu vorgesehen ist, die Pumpenanordnung unter einer mit einer Durchflußöffnung versehenen Behälterfläche zu tragen.

Mit Bezugsziffer 112 ist ein Rücklaufsperrventil bezeichnet, das in einem Durchflußelement angebracht ist und nach einer Betriebsunterbrechung das Trockenfließen der Pumpe verhindert.

113 betrifft ein Adapterstück das einen Übergang von eckigen Systemquerschnitten auf runde Systemquerschnitte ermöglicht.

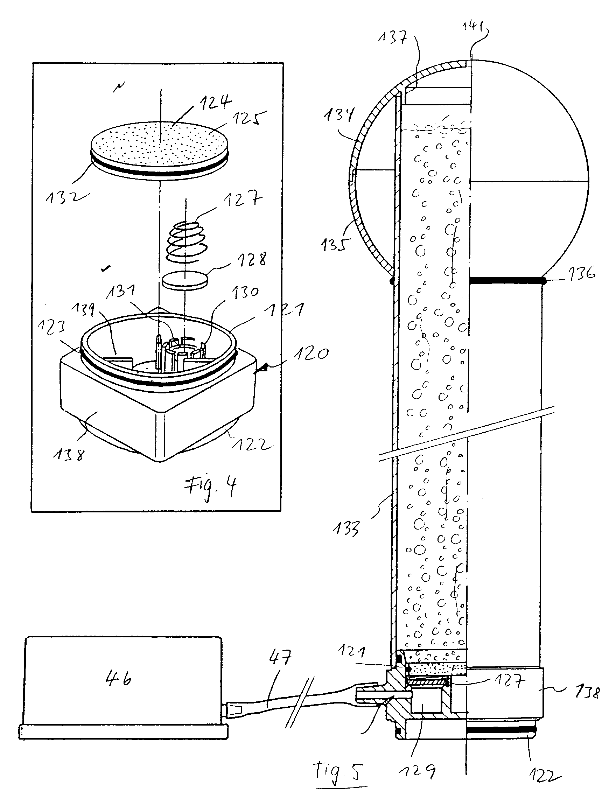

Fig. 4 zeigt die Belüftungseinrichtung als Belüftungsmodul 120 für den Einsatz in dem Flüssigkeitspumpensystem gemäß dieser Erfindung. Das Belüftungsmodul 120 umfaßt ein eigenes Gehäuse 138 mit einem oberen Flansch 121 sowie unteren Flansch 122. Beide Flansche weisen jeweils eine Dichtung in Form eines O-Rings z.B. 123 auf.

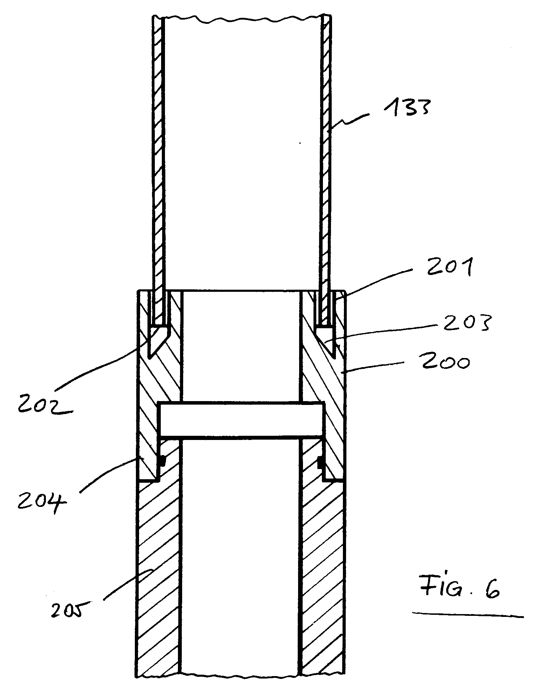

Innerhalb des beidseitig offenen Gehäuses 138 sind mehrere Auflagestege 139 angeordnet, an deren Oberseite - vgl. auch Fig. 5 - ein scheibenförmiger Belüftungsstein 124 aufliegt. Der Belüftungsstein 124 weist eine Vielzahl feinverteilter durchgängiger Poren 195 auf.

Entlang der seitlichen Umfangsfläche des Belüftungssteins 124 ist eine umlaufende Nut 201 vorgesehen, die einen ORing 132 aufnimmt.

Unterhalb des auf den einzelnen Auflagestegen 139 positionierten Belüftungssteins 124 befindet sich eine mit der Luftzufuhr, d.h. Pumpe 46 in Verbindung stehende Luftkammer 129, über die Luft der Sprudelstrecke 140 innerhalb des zylindrischen Rohrkörpers 133 zugeführt wird.

An der Oberseite der Luftkammer 129 liegt ein vorzugsweise aus Kunststoff (z.B. Silikon) bestehendes loses Ventilplättchen 128 innerhalb kreisförmig angeordneter Haltvorsprünge 130 an der Oberseite der Luftkammer 129 zentriert auf und wird über eine Druckfeder 127, die sich gegen den Belüftungsstein 124 abstützt, in Schließposition gehalten. Die als Pyramidendruckfeder ausgebildete Feder 127 ist vorzugsweise derart ausgebildet, daß sie gleichsam auf eine Höhe 0 zusammengedrückt werden kann, da für die Öffnungsbewegung des Ventilplättchens 128 innerhalb des Belüftungsmoduls wenig Raum zur Verfügung steht.

Bei Überdruck wegen Luftzufuhr öffnet das Ventilplättchen 128 der Luftkammer 129 und die zugeführte Luft strömt ringförmig an der Oberseite der Luftkammer aus, wobei die Luft gleichverteilt durch den Belüftungsstein 124 hindurchtritt und - wie in Fig. 5 dargestellt - über die gesamte Breite der Sprudelstrecke verteilte Luftbläschen erzeugt werden. Sofern jedoch der Pumpenbetrieb eingestellt wird, wird aufgrund der Wirkung der Druckfeder 127 das Ventilplättchen 128 auf den oberen Rand der Luftkammer 129 aufgedrückt, wodurch ein Einlauf von Wasser in die Luftzuführungsleitungen 47, d.h. in die Pumpe 46 selbst wirksam vermieden wird.

Der obere Rand der Luftkammer 129 ist zur Gewährleistung einer optimalen Funktion spitz zulaufend vorzugsweise mit steileren Außen- und flacheren Innenflanschen ausgebildet.

Fig. 5 zeigt das komplette Belüftungsmodul 120 z.B. mit einer an der Oberseite, d.h. an dem oberen Flansch 121 befestigten transparenten Röhre 133 zur Bildung einer Sprudelstrecke, welche zu dekorativen Zwecken in unterschiedlichsten Bereichen eingesetzt werden kann. Die Röhre 133 ist an der Oberseite offen ausgebildet, wobei das offene Ende mittels eines aus zwei Kugelelementen 134, 135 bestehenden Kugelabschluß verschlossen ist.

Das untere Kugelelement 135 sitzt auf einem an der Außenseite der Röhre 133 angeordneten O-Ring 136 auf und trägt das obere Kugelelement 134, welches aufgrund des umlaufenden Auflagevorsprungs 137 eine zusätzliche Zentrierung sowie Fixierung zur Röhre 133 hin erfährt. Die Kugelelemente 134, 135 sind zweckmäßigerweise transparent ausgebildet und bestehen aus Kunststoff. Der Kugelabschluß bewirkt einen hermetischen Abschluß des offenen Endes der Röhre 133, wobei Luft über eine kleine an der Stirnseite mittig zur Längsachse der Röhre 133 angeordnete Öffnung 141 entweichen kann. Beide Kugelelemente 134, 135 sind lediglich aufgesteckt und können in einfacher Weise abgenommen werden.

Die Kugelelemente 134, 135 sind universell verwendbar, beispielsweise können zu dekorativen Zwecken zwei Kugelelemente 135 auch an einer innen liegenden Stelle entlang des Verlaufs der Röhre 133 angeordnet werden.

Die untere Seite des Belüftungsmodul 120 kann aufgrund des unterseitigen Flansches 122 mit unterschiedlichsten Modulen des Flüssigkeitspumpensystems (z.B. mit einem Beleuchtungsmodul, einem Saugfuß, etc.) verbunden werden. Beispielsweise kann das Belüftungsmodul 120 aber auch in einen Rohrleitungskreislauf zur Belüftung von Laborleitungen genutzt, d.h. zu technisch-wissenschaftlichen Zwecken eingesetzt werden.

Fig. 6 zeigt den erfindungsgemäßen Anschlußflansch 200 zur Verbindung der Röhre 133, insbesondere Glasröhre mit einem beliebigen A des erfindungsgemäßen Flüssigkeitspumpensystems. Insbesondere Glasröhren weisen fertigungsbedingt nicht unerhebliche Schwankungen im Durchmesser und/oder der Wandstärke auf, so daß es bisher schwierig war, hier zum einen eine mechanisch sichere und zum anderen eine wasserdichte Verbindung herzustellen, Der sogenannte Anschlußflansch 200 weist zu diesem Zweck eine umlaufende Nut 201 an seiner einen Stirnseite auf, wobei das gegenüberliegende Ende des Anschlußflansches 200 einen Flansch 204 besitzt, der zur Verbindung mit den einzelnen Modulteilen z.B. 205 des Flüssigkeitspumpensystems dient.

Im Inneren der Nut 201 sind über den Umfang verteilt einzelne Auflagestege 202 vorgesehen. Zur Verbindung des Anschlußflansches 200 mit der Röhre 133 wird zweckmäßigerweise die umlaufende Nut 201 zumindest zum Teil mit einem Kleber, vorzugsweise Zwei-Komponenten-Kleber gefüllt und anschließend die Röhre 133 in die umlaufende Nut 201 eingesetzt.

Die Auflagestege 202 bewirken, daß sich der Kleber auch an der Unterseite der eingesetzten Röhre 133 gleichmäßig verteilt. Die Breite der Nut 201 ist so dimensioniert, daß auch bei eingesetzter Röhre 133 Freiraum verbleibt, der zur Aufnahme des Klebers dient und darüber hinaus die bei Glasröhren auftretenden Durchmesser- sowie Wandungsschwankungen kompensiert.

## Patentansprüche

1. Elektrisch antreibbares Flüssigkeitspumpensystem mit
- einem Pumpengehäuse (2), das
-- an einer Seite (seiner Unterseite 3) mit einer Ansaugöffnung (4),
-- an einer anderen Seite (Oberseite 5) mit einer Auslaßöffnung (6) versehen ist und
-- in dem eine mit der Ansaugöffnung (4) und der Auslaßöffnung (6) verbundene Pumpkammer (8) angeordnet ist, in welcher sich ein motorisch antreibbares Förderelement (9) bewegt sowie
- einem mit dem Pumpengehäuse verbindbaren Fußteil zum Aufstellen der Pumpe auf dem Boden eines Flüssigkeitsbehälters derart, daß sich das Pumpengehäuse zumindest teilweise unter dem Flüssigkeitsspiegel befindet,
**dadurch gekennzeichnet,**
daß
- die Auslaßöffnung (6) von einem Auslaßflanschelement (20) umgeben ist, das so ausgebildet ist, daß
-- an das Auslaßflanschelement (20) ein Gegenflansch (21) eines mit dem Pumpengehäuse (2) und dem angesetzten Fußteil (13) zu einem freistehenden und/oder selbsttragenden turmartigen Gebilde verbaubaren Durchfluß/oder Ausflußsystemelement abdichtend und sich gegenseitig abstützend ansetzbar ist.

2. Flüssigkeitspumpensystem nach Anspruch 1,
**dadurch gekennzeichnet,**
daß die Ansaugöffnung (4) von einem Ansaugflanschelement (22) umgeben ist, an welches ein Gegenflanschelement des Fußteils (13) derart ansetzbar ist, daß zwischen dem Fußteil (13) und dem Pumpengehäuse (2) eine flüssigkeitsdichte, sich gegenseitig mechanisch abstützende Verbindung erzielt wird.

3. Flüssigkeitspumpensystem nach Anspruch 2,
**dadurch gekennzeichnet,**
daß das Ansaugflanschelement (22) und das Auslaßflanschelement (20) identisch ausgebildet sind.

4. Flüssigkeitspumpensystem nach Anspruch 2,
**dadurch gekennzeichnet,**
daß das Ansaugflanschelement (22) und das Auslaßflanschelement (20) unterschiedliche Durchmesser haben.

5. Flüssigkeitspumpensystem nach Anspruch 2,
**dadurch gekennzeichnet,**
daß das Ansaugflanschelement (22) und das Auslaßflanschelement Flanschelement (20) unterschiedliche Form haben.

6. Flüssigkeitspumpensystem nach einem der vorhergehenden Ansprüche,
**dadurch gekennzeichnet,**
daß das Ansaug- und das Auslaßflanschelement an sie angesetzten Gegenflansche (21, 23) mit Klemmsitzwirkung beaufschlagen.

7. Flüssigkeitspumpensystem nach einem der vorhergehenden Ansprüche,
**dadurch gekennzeichnet,**
daß jedes Durchflußsystemelement (40) an seiner Unterseite mit einem zum Auslaßflansch (20) passenden Gegenflansch (21) und an seiner Oberseite mit einem dem Auslaßflanschelement (20) entsprechenden Befestigungsflansch (44) versehen ist.

8. Flüssigkeitspumpensystem nach Anspruch 5,
**dadurch gekennzeichnet,**
daß die Klemmsitzwirkung durch ein im Flanschverbindungsbereich angeordnetes O-Ring-Dichtelement (24) verursacht oder zumindest teilweise verstärkt wird.

9. Flüssigkeitspumpensystem nach einem der vorhergehenden Ansprüche,
**dadurch gekennzeichnet,**
daß die den Gegenflansch (21) umgebenden Gehäusebereiche (26') des angesetzten Durchfluß/Abflußsystemelementes den das Auslaßflanschelement (20) umgebenden Gehäusewandungsbereich (26) des Pumpengehäuses beaufschlagen.

10. Flüssigkeitspumpensystem nach einem der vorhergehenden Ansprüche,
**dadurch gekennzeichnet,**
daß ein den Gegenflansch (23) des Fußteils (13) umgebender Wandungsbereich (25') die ansaugseitige Wandung (25) (Unterseite) des Pumpengehäuses (2) beaufschlagt.

11. Flüssigkeitspumpensystem nach einem der vorhergehenden Ansprüche,
**dadurch gekennzeichnet,**
daß das Pumpengehäuse (2) eine kubische oder kubusähnliche Form aufweist.

12. Flüssigkeitspumpensystem nach einem der vorhergehenden Ansprüche
**dadurch gekennzeichnet,**
daß die Seitenwandungslänge aller vier Seitenwandungen (27) des Pumpengehäuses (2) identisch ist.

13. Flüssigkeitspumpensystem nach einem der vorhergehenden Ansprüche,
**dadurch gekennzeichnet,**
daß der Querschnitt der unmittelbar mit dem Pumpengehäuse (2) verbindbaren Durchfluß/Abflußsystemelemente der Querschnittsform des Pumpengehäuses (2) entspricht.

14. Flüssigkeitspumpensystem nach einem der vorhergehenden Ansprüche,
**dadurch gekennzeichnet,**
daß das Fußteil (13, 35) peripher (13) über die Seitenwandungen (27) des Pumpengehäuses (2) hinaussteht.

15. Flüssigkeitspumpensystem nach einem der vorhergehenden Ansprüche,
**dadurch gekennzeichnet,**
daß das Fußteil (13, 35) eine mit seinem Gegenflansch (23) verbundene Filterkammer (28) aufweist.

16. Flüssigkeitspumpensystem nach einem der vorhergehenden Ansprüche,
**dadurch gekennzeichnet**,
daß das Fußteil (13, 35) eine Neigungsverstellvorrichtung (80) aufweist oder mit einer solchen Vorrichtung verbaubar ist.

17. Flüssigkeitspumpensystem nach einem der vorhergehenden Ansprüche,
**dadurch gekennzeichnet,**
daß das Fußteil (90) eine konkav einwölbbare elastische Bodenwandung (92) aufweist, deren Mittenbereich mit einem Exzenterhebel (91) zur Verursachung einer Saugwirkung aktiv anhebbar ist.

18. Flüssigkeitspumpensystem nach einem der vorhergehenden Ansprüche,
**dadurch gekennzeichnet**,
daß der wirksame Querschnitt des Ansaug- (22) und/oder des Auslaßflanschelementes (20) einstellbar ist.

19. Flüssigkeitspumpensystem nach einem der vorhergehenden Ansprüche,
**dadurch gekennzeichnet**,
daß der Querschnitt eines flüssigkeitsführenden Elementes im Bereich der Pumpenkammer (8) veränderbar ist.

20. Flüssigkeitspumpensystem nach einem der vorhergehenden Ansprüche,
**dadurch gekennzeichnet,**
daß mindestens ein Durchflußsystemelement (45) als Durchlüftereinheit ausgebildet ist, die einen an eine Luftpumpe (46) anschließbaren, in den Flüssigkeitskanal mündenden Luftkanal aufweist.

21. Flüssigkeitspumpensystem nach einem der vorhergehenden Ansprüche,
**dadurch gekennzeichnet**,
daß mindestens ein Durchflußsystemelement (52) eine Schiebervorrichtung (53) aufweist, mit welcher der wirksame Querschnitt des in ihm verlaufenden Durchflußkanales veränderbar ist.

22. Flüssigkeitspumpensystem nach einem der vorhergehenden Ansprüche,
**dadurch gekennzeichnet,**
daß mindestens ein Durchflußsystemelement (48) als Beleuchtungseinheit ausgebildet ist, die eine zumindest teilweise von der Flüssigkeit umspülte Leuchtquelle (41) aufweist.

23. Flüssigkeitspumpensystem nach einem der vorhergehenden Ansprüche,
**dadurch gekennzeichnet**,
daß es mindestens ein deckelartiges, auf das Auslaßflanschelement (20) passendes Reduzierungselement (55, 61, 66, 68) aufweist, das mindestens einen querschnittsverengten Rohransatz (66, 69) zum Aufsetzen von flüssigkeitsführenden Verlängerungsrohrelementen (57) und/oder Spritzdüsen (62) aufweist.

24. Flüssigkeitspumpensystem nach einem der vorhergehenden Ansprüche,
**dadurch gekennzeichnet**,
daß in einem oberhalb des Pumpengehäuses (2) befindlichen Flanschverbindungsbereich ein schalenartiges Element (49) mit einem Ablaufrohr (50) angeordnet ist, durch welches rückfließende Flüssigkeit am Pumpengehäuse (2) vorbeigeleitet wird.

25. Flüssigkeitspumpensystem nach Anspruch 22,
**dadurch gekennzeichnet,**
daß die Einlaßöffnung (51) des Ablaufrohres (50) bezogen auf den Boden des schalenartigen Elementes (49) höhenverstellbar ist.

26. Flüssigkeitspumpensystem nach einem der vorhergehenden Ansprüche,
**dadurch gekennzeichnet,**
daß am oberen Ende mindestens eines Auslaßsystemelementes ein sich nach oben öffnender Trichter angeordnet ist, der durch mindestens eine auf der Trichteröffnung frei aufliegende Kugel (71) abgedeckt wird.

27. Flüssigkeitspumpensystem nach einem der vorhergehenden Ansprüche,
**dadurch gekennzeichnet,**
daß flüssigkeitsführende Systemelemente aus transparentem oder opaleszentem Werkstoff bestehen.

28. Flüssigkeitspumpensystem nach einem der vorhergehenden Ansprüche,
**dadurch gekennzeichnet**,
daß mindestens einer der Durchflußsystemelemente (68) eine Mehrzahl von Auslaßkanälen aufweist.

29. Flüssigkeitspumpensystem nach einem der vorhergehenden Ansprüche,
**dadurch gekennzeichnet,**
daß mindestens eines der Durchflußelemente ein Rücklaufsperrventil (112) aufweist.

30. Flüssigkeitspumpensystem nach einem der vorhergehenden Ansprüche, das mindestens ein Fußteil (13, 35), ein Pumpengehäuse, ein Durchfluß/Auslaßsystemelement (40, 70) in turmartig zusammengesetzter Bauweise umfasst,
**gekennzeichnet durch**
seine Verwendung als Zierbrunnen in einer Pflanzschale oder einem Teich.

31. Flüssigkeitspumpensystem nach Anspruch 29,
**gekennzeichnet durch**
seine Verwendung als Raumluftbefeuchter.

32. Flüssigkeitspumpensystem nach einem der vorhergehenden Ansprüche 29 oder 30,
**gekennzeichnet durch**
seine Verwendung als beleuchtetes Dekorationselement.

33. Belüftungseinrichtung, insbesondere für ein Flüssigkeitspumpensystem nach einem der vorhergehenden Ansprüche
**gekennzeichnet durch**
a) ein Gehäuse (138), welches mit einem Flüssigkeitssystem verbindbar ist;
b) eine innerhalb des Gehäuses (138) angeordneten, flächigen Einrichtung zur Erzeugung einer Vielzahl von flächig verteilten Luftbläschen sowie
c) einer Einwegeventileinrichtung, welche innerhalb des Gehäuses (138) angeordnet ist und bei Wegfall der Luftversorgung einen Rückfluß des Wassers in die Pumpe (46) verhindert.

34. Belüftungseinrichtung nach Anspruch 33,
**dadurch gekennzeichnet,**
daß als Einrichtung zur Erzeugung einer Vielzahl von Luftbläschen ein vorzugsweise scheibenförmiger, sich über den gesamten Querschnitt des Gehäuses (138) erstreckender Belüftungskörper, insbesondere Belüftungsstein (124) vorgesehen ist, an dessen Unterseite Luft zugeführt und an dessen Oberseite Luftblasen gebildet werden.

35. Belüftungseinrichtung nach Anspruch 34,
**dadurch gekennzeichnet,**
daß der Belüftungsstein (124) eine seitlich umlaufende Nut (201) aufweist, die einen O-Ring (123) aufnimmt.

36. Belüftungseinrichtung nach den Ansprüchen 33 - 35,
**dadurch gekennzeichnet,**
daß unterhalb des Belüftungsstein (124) eine nach oben hin offene Luftkammer (129) angeordnet ist und zwischen der Luftkammer (129) und dem Belüftungsstein (124) ein druckfeder(127)-beaufschlagtes Ventilplättchen (128) vorgesehen ist, welches sich bei Luftzufuhr aufgrund des hierdurch herrschenden Drucks öffnet und einen Durchlaß von Luft ermöglicht und bei Wegfall der Luftzufuhr bzw. bei Unterschreitung eines federabhängigen Grenzwertes schließt.

37. Belüftungseinrichtung nach den Ansprüchen 33 - 36,
**dadurch gekennzeichnet,**
daß das Gehäuse (138) als A mit ober- und/oder unterseitigen Flansch (121 bzw. 122) ausgebildet ist.

38. Anschlußflansch, insbesondere für Flüssigkeitspumpensystem nach einem der vorhergehenden Ansprüche,
**gekennzeichnet durch folgende Merkmale,**
a) der Anschlußflansch (200) weist an seiner Stirnseite eine umlaufende Nut (201) zur Aufnahme des Endbereichs eines zylindrischen Rohrkörpers (133), insbesondere Glasrohr auf;
b) die Breite der Nut (201) ist größer als die Wandungsstärke des Rohrkörpers (133) derart, daß ein zusätzlicher Füllraum bei eingesetztem Rohrkörper (133) verbleibt;
c) die Unterseite des Anschlußflanschs (200) ist als standardisierter Flansch (204) zur Gewährleistung einer Verbindung mit anderen Funktionsteilen (z.B. einem Belüftungsmodul, Beleuchtungsmodul, etc.) ausgebildet, wobei
d) eine Verbindung von Rohrkörper (133) und Anschlußflansch (200) durch einen Kleber erfolgt, der vorzugsweise vor Zusammenfügen der beiden Teile in die Nut (201) gefüllt wird.

39. Flüssigkeitspumpensystem nach Anspruch 38,
**dadurch gekennzeichnet,**
daß innerhalb der Nut (201) ringförmig angeordnete Auflagestege (202) vorgesehen sind.
